Europäisches Patentamt

European Patent Office

Office européen des brevets

(11) Veröffentlichungsnummer: **0 623 759 B1**

(12) **EUROPÄISCHE PATENTSCHRIFT**

(45) Veröffentlichungstag der Patentschrift: **01.03.95**

(51) Int. Cl.6: **F16B 25/00**

(21) Anmeldenummer: **93107217.7**

(22) Anmeldetag: **04.05.93**

(54) **Gewindeformende Schraube.**

(43) Veröffentlichungstag der Anmeldung:
**09.11.94 Patentblatt 94/45**

(45) Bekanntmachung des Hinweises auf die
Patenterteilung:
**01.03.95 Patentblatt 95/09**

(84) Benannte Vertragsstaaten:
**AT BE CH DE DK ES FR GB GR IE IT LI LU MC
NL PT SE**

(56) Entgegenhaltungen:
**EP-A- 0 433 484
CH-A- 651 115
US-A- 3 937 119
US-A- 3 965 793**

(73) Patentinhaber: **LUDWIG HETTICH SCHRAU-
BENFABRIK GmbH & Co.
Dr. Kurt-Steim-Strasse 28
D-78713 Schramberg-Sulgen (DE)**

(72) Erfinder: **Hettich, Stefan
Haldenhof 18
W-7230 Schramberg (DE)**
Erfinder: **Hettich, Ulrich
Hauptstrasse 11
W-7239 Fluorn-Winzeln (DE)**

(74) Vertreter: **Liesegang, Roland, Dr.-Ing. et al
FORRESTER & BOEHMERT
Franz-Joseph-Strasse 38
D-80801 München (DE)**

**Beschreibung**

Die Erfindung betrifft eine gewindeformende Schraube und deren Verwendung in einer Bohrung.

Eine bekannte Schraube (CH-A-651 115) weist ein Gewinde mit einem Verhältnis des Außendurchmessers zur Steigung von etwa 2,5 und einem Flankenwinkel im Bereich zwischen 50° und 65° auf. Bei einem Ausführungsbeispiel ist ein Verhältnis des Außendurchmessers zum Kerndurchmesser von etwa 1,3 verwirklicht.

Der Erfindung liegt die Aufgabe zugrunde, eine gewindeformende Schraube so auszubilden, daß ein einfaches und zuverlässiges Befestigen von Bauteilen an Beton oder Mauerwerk ohne Verwendung von Dübeln oder anderen Hilfsmitteln ermöglicht ist.

Zur Lösung dieser Aufgabe dienen die Patentansprüche 1 und 9.

Bei der gewindeformenden Schraube sind die Dimensionierungsparameter des Gewindes so gewählt, daß

- wenig Gewinde im Eingriff ist, damit das Eindrehmoment in hartes Material, wie Beton, nicht zu groß wird;
- der Abstand zwischen zwei Windungen des Gewindes genügend groß ist, um der Eigenschaft des Betons, im wesentlichen Druck- und nur kleine Zugkräfte übertragen zu können, Rechnung zu tragen.

Gemäß einer Weiterbildung der Erfindung weist der Schraubenschaft beiseitig des Gewindefußes Vertiefungen zur Aufnahme des ausgebrochenen Beton- oder Gesteinsmehls auf, was bei einer Holzschraube zu einem anderen Zweck, nämlich zur Verbesserung der Haltewirkung, an sich bekannt ist.

In den Ansprüchen 3 bis 5 sind weitere Dimensionierungsvorschriften angegeben, welche die Steigung p, den Kerndurchmesser $d_k$ und den Außendurchmesser $d_a$ des Gewindes in Beziehung zum Durchmesser $d_b$ der in den Beton oder das Mauerwerk vorzubohrenden Bohrung setzen. Für die genannten Größen sind in den Ansprüchen 3 bis 5 Bereiche angegeben, innerhalb denen die Schraube hinsichtlich des Eindrehmomentes und der Haltewirkung optimale Ergebnisse bringt.

Aus der EP-A-433 484 ist eine gewindeformende Schraube bekannt, bei welcher der Gewindegrat bugförmige Schneidezähne aufweist. Die bekannte Schraube ist zum Einschrauben in Holz- oder Spanplattenmaterial konzipiert. Überraschend führt die Anwendung solcher Schneidezähne auch bei der Schraube nach der Erfindung zu einem wesentlich leichteren Einschrauben der Schraube in dem spröden, leicht ausbrechenden Beton, aber auch in Mauerwerk oder Gestein. Bevorzugt ist dabei eine Ausgestaltung gemäß Anspruch 7.

In Abwandlung der bekannten Schraube nach der EP-A-433 484 ist bei der Schraube nach der Erfindung jedoch bevorzugt, daß die die Schneidezähne bildenden Ausnehmungen eine Tiefe aufweisen, welche 5/7 bis 7/7 der Gewindehöhe entspricht.

Schneidkerben sind grundsätzlich bei Schrauben zum Einschrauben in Mauerwerk bekannt (US-A-3 937 119).

Weitere Ausgestaltungen der Erfindung sind in den weiteren Unteransprüchen angegeben.

Die Erfindung ist im folgenden anhand schematischer Zeichnungen an Ausführungsbeispielen mit weiteren Einzelheiten näher erläutert.

Es zeigen:

Fig. 1     eine Schraube nach der Erfindung in Seitenansicht;

Fig. 2     eine abgewandelte Schraube nach der Erfindung;

Fig. 3     eine Teilansicht in Richtung des Pfeiles B in Fig. 4;

Fig. 4     einen Teilschnitt in einer Ebene enthaltend den Gewindegrat eines Teilbereichs des Gewindes;

Fig. 5     eine Teilansicht in Richtung des Pfeiles C in Fig. 4 in abgewickelter Darstellung;

Fig. 6     einen Teilschnitt in einer Ebene enthaltend den Gewindegrat eines Teilbereiches des Gewindes einer abgewandelten Schraube nach der Erfindung und

Fig. 7     eine Ansicht in Richtung des Pfeiles D in Fig. 6 in abgewickelter Darstellung.

Die gezeigte Schraube weist einen Schraubenkopf 11, einen zylindrischen Schraubenschaft 12 und eine kegelstumpfförmige Schraubenspitze 13 zum Erleichtern des Einführens der Schraube in ein Bohrloch 10 auf.

Ein Gewinde 14 erstreckt sich über die Länge des Schaftes 12 bis zu dem kegelstupfförmigen Ende 13. Mit 15 ist der Gewindegrat, d.h. die umlaufende Außenkante der Windungen des Gewindes 14 bezeichnet.

Im folgenden bedeuten:

$d_a$     - Außendurchmesser, gemessen über den Gewindegrat 15;

$d_k$     - Kerndurchmesser des Schaftes 12;

$d_b$     - Bohrungsdurchmesser der vorgebohrten Bohrung 10;

2

p       - Steigung zwischen zwei Windungen der Schraube;

$\alpha$       - Flankenwinkel des Gewindes.

Die genannten Abmessungen stehen in den folgenden Beziehungen (1), (2) und (3) zueinander:

$$1 \geq \frac{p}{d_b} \geq 0{,}6; \qquad\qquad (1)$$

$$1 \geq \frac{d_k}{d_b} \geq 1 - \frac{0{,}5}{d_b} \qquad\qquad (2)$$

$$d_a = -0{,}0277\, d_b{}^2 + 1{,}491\, d_b - 0{,}447. \qquad (3)$$

Diese Verhältnisse bzw. Gleichungen gelten auch für die Abwandlung nach Fig. 2, in der gleiche Teile mit gleichen Bezugszeichen bezeichnet sind und nicht nochmals beschrieben sind.

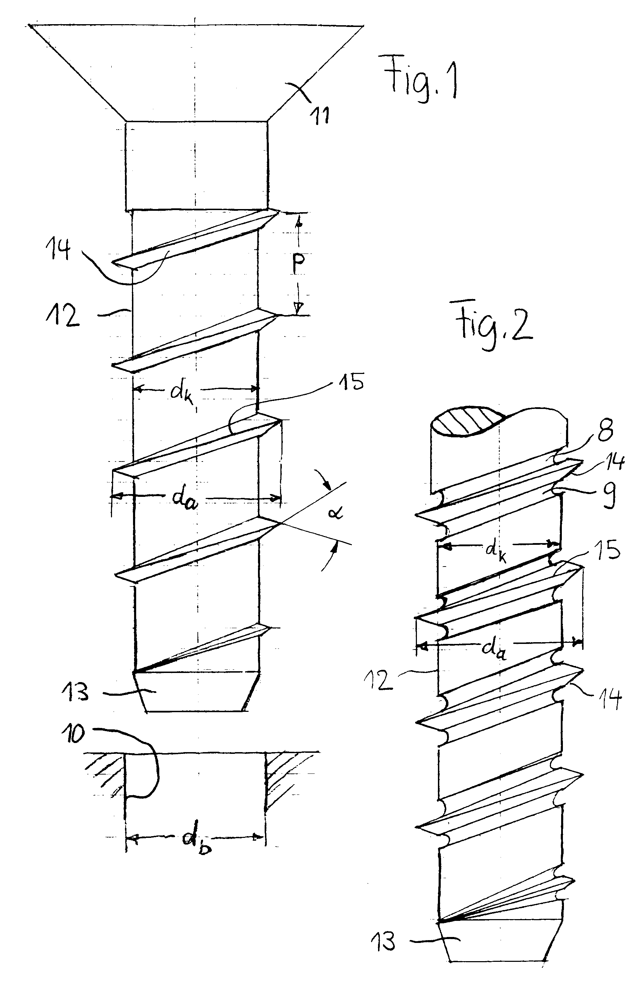

Der einzige Unterschied im Vergleich zur Ausführung nach Fig. 1 besteht darin, daß beidseits des Gewindes 14 damit umlaufend Vertiefungen 8, 9 zur Aufnahme des ausgebrochenen Beton- oder Gesteinsmehls vorgesehen sind. Hierdurch wird das Eindrehen der Schraube in Beton oder Mauerwerk zusätzlich erleichtert.

Bei einer bevorzugten Ausführung ist der Gewindegrat 15 in Abständen durch Ausnehmungen 16 unterbrochen, derart, daß die stehenbleibenden Gratabschnitte Schneidezähne 17 mit in Einschraubrichtung der Schraube weisender Schneidkante 17a bilden. Die Teilung für die Schneidezähne ist dabei beispielsweise so vorgenommen, daß je nach Durchmesser sechs bis dreißig Zähne pro Windung entstehen. Wie am besten aus den Figuren 2, 3, 4 und 5 ersichtlich ist, sind die den Gewindegrat 15 unterbrechenden Ausnehmungen 16 so ausgebildet, daß sich am Grund der Ausnehmung eine ebene Fläche 18 bildet, die in Ausdrehrichtung der Schraube als Sperre wirkt. Die die Schneidekante 17a bildenden Schneidflanken 19 schneiden in einem Winkel 20 von vorzugsweise 75 bis 100 Grad die Gewindeflankenflächen 21, und zwar an Kanten 22.

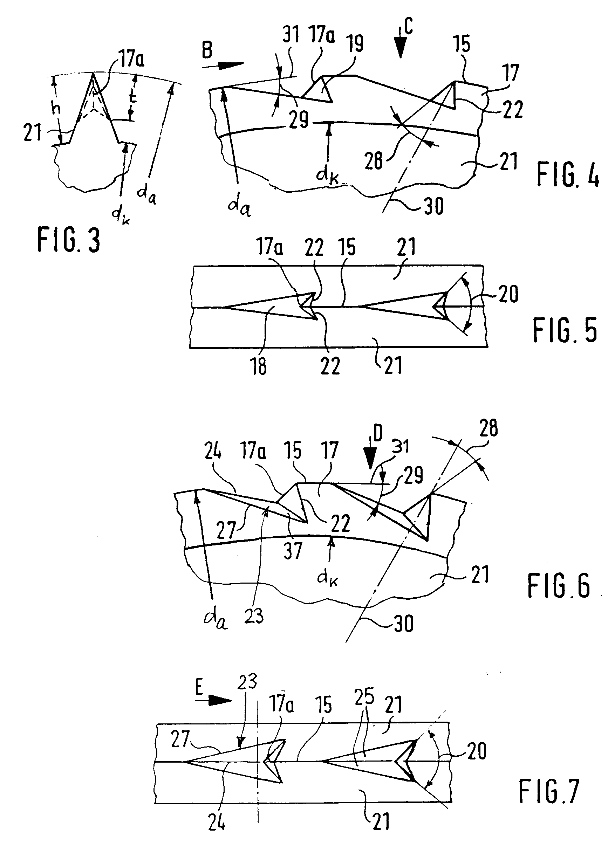

Die Figuren 6 und 7 zeigen eine Abwandlung, die sich von der eben beschriebenen Ausführungsform lediglich bezüglich der Ausbildung des Grundes der Ausnehmungen 16 unterscheidet. Bei der Abwandlung ist nämlich die den Grund der Ausnehmungen 16 darstellende Fläche nicht als ebene Fläche 18 sondern als Keil 23 ausgebildet, wobei die Keilkante 24 in den Gewindegrat 15 übergeht. Die Keilflächen 25 des Keils 23 bilden einen Winkel von vorzugsweise 60 bis 100 Grad und schneiden die Gewindeflankenflächen 21 in den Kanten 27. Dies bewirkt, daß beim Einschrauben der Schraube das durch die Schneidkanten 17a gelöste Material leichter über die geneigten Flächen 25 zum Gewindegrund abgeführt werden kann.

Die Tiefe der die Schneidezähne 17 bildenden Ausnehmungen 16 liegt vorzugsweise zwischen 5/7 und 7/7 der Gewindehöhe des Gewindes 14. Die Schneidkante 17a ist zweckmäßigerweise in einem bezüglich der radialen Richtung negativen Winkel 28 zwischen 25° und 35° zum Schraubenradius 30 anzustellen. Die Fläche 18 bzw. die Keilkante 24 weist vorzugsweise einen Winkel 29 zur Tangente 31 von 20 bis 30 Grad auf. Alle Übergänge der die Gewindeflankenflächen schneidenden Flächen sind so auszubilden, daß keine scharfen Kanten entstehen, die den Materialfluß beeinträchtigen würden.

**Patentansprüche**

1. Gewindeformende Schraube zum unmittelbaren Einschrauben in Beton, Mauerwerk oder dergleichen mit Schraubenkopf (11) und Schraubenschaft (12), deren Gewinde (14) sich mindestens teilweise über die Länge des Schraubenschaftes erstreckt, wobei das Verhältnis von Außendurchmesser ($d_a$) zu Kerndurchmesser ($d_K$) der Schraube etwa 1,25 - 1,5 beträgt, daß das Verhältnis von Außendurchmesser ($d_a$) zu Steigung (p) des Gewindes (14) etwa 1,5 - 1,6 beträgt und daß der Flankenwinkel ($\alpha$) des Gewindes (14) kleiner als 50° und größer oder gleich 35° ist.

2. Schraube nach Anspruch 1, dadurch **gekennzeichnet**, daß der Schraubenschaft beidseitig des Gewindefußes Vertiefungen (8, 9) zur Aufnahme ausgebrochenen Gesteinsmehls aufweist.

3. Schraube nach einem der Ansprüche 1 oder 2, dadurch **gekennzeichnet**, daß der Gewindegrat (15) des Gewindes (14) bugförmige Schneidezähne (17) aufweist.

4. Schraube nach Anspruch 3, dadurch **gekennzeichnet**, daß der Gewindegrat (15) des Gewindes (14) in Abständen durch Ausnehmungen (16) unterbrochen ist, daß die zwischen den Ausnehmungen (16) stehenbleibenden Gratabschnitte die bugförmigen Schneidezähne (17) bilden, und daß die in der gleichen Ebene wie der Gewindegrat verlaufenden Schneidkanten (17a) der Schneidezähne (17) in Einschraubrichtung des Gewindes (14) weisen und unter einen negativen Winkel (28) bezüglich der radialen Richtung (30) angestellt sind.

5. Schraube nach Anspruch 3 oder 4, dadurch **gekennzeichnet**, daß je Windung des Gewindes (14) sechs bis dreißig Schneidezähne (17) vorgesehen sind.

6. Schraube nach einem der Ansprüche 3 bis 5, dadurch **gekennzeichnet**, daß die die Schneidezähne (17) bildenden Ausnehmungen (16) eine Tiefe (t) aufweisen, welche 5/7 bis 7/7 der Gewindehöhe (h) entspricht.

7. Schraube nach einem der Ansprüche 3 bis 6, dadurch **gekennzeichnet**, daß der negative Anstellwinkel (28) der Schneidkanten (17a) der Schneidezähne (17) 25° bis 35° beträgt.

8. Schraube nach einem der Ansprüche 1 bis 7, dadurch gekennzeichnet, daß anstelle oder in Verlängerung des Schraubenkopfes (11) eine Verlängerung, insbesondere ein Schraubbolzen mit metrischem Gewinde, vorgesehen ist.

9. Verwendung einer Schraube nach einem der Ansprüche 1 bis 8 in einer Bohrung, dadurch **gekennzeichnet**, daß sich die Steigung (p) in bezug auf den Bohrungsdurchmesser ($d_b$) der zur Aufnahme der Schraube vorgebohrten Bohrung (10) wie folgt verhält:

$$ 1 \geq \frac{p}{d_b} \geq 0,6 $$

10. Verwendung nach Anspruch 9, dadurch **gekennzeichnet**, daß sich der Kerndurchmesser ($d_k$) in bezug auf den Bohrungsdurchmesser ($d_b$) wie folgt verhält:

$$ 1 \geq \frac{d_k}{d_b} \geq 1 - \frac{0,5}{d_b} $$

11. Verwendung nach einem der Ansprüche 9 oder 10, dadurch **gekennzeichnet**, daß sich der Außendurchmesser ($d_a$) in bezug auf den Bohrungsdurchmesser ($d_b$) wie folgt verhält:

$$ d_a = -0{,}0277\, d_b^2 + 1{,}491\, d_b - 0{,}447 $$

## Claims

1. Thread forming screw for direct insertion into concrete, masonry or the like having a screw head (11) and screw shank (12), whose thread (14) at least partly extends over the screw shank length, wherein the ratio of the external diameter ($d_a$) to the core diameter ($d_k$) of the screw is approximately 1.25 to 1.5, the ratio of the external diameter ($d_a$) to the lead (p) of the thread (14) is approximately 1.5 to 1.6 and the profile angle ($\alpha$) of the thread (14) is smaller than 50° and equal to or larger than 35°.

2. Screw according to claim 1, characterized in that on either side of the thread base the screw shank has depressions (8,9) for receiving broken away rock flour.

3. Screw according to one of the claims 1 or 2, characterized in that the thread burr (15) of the thread (14) has bow-shaped cutting teeth (17).

4. Screw according to claim 3, characterized in that the thread burr (15) of the thread (14) is interrupted at intervals by recesses (16), that the burr portions left behind between the recesses (16) form the bow-shaped cutting teeth (17) and that the cutting edges (17a) of the cutting teeth (17) in the same plane as the thread bore are directed in the insertion direction of the thread (14) and are set at a negative angle (28) with respect to the radial direction (30).

5. Screw according to claim 3 or 4, characterized in that per turn of the thread (14) there are six to thirty cutting teeth (17).

6. Screw according to one of the claims 3 to 5, characterized in that the recesses (16) forming the cutting teeth (17) have a depth (t), which corresponds to 5/7 to 7/7 of the thread height (h).

7. Screw according to one of the claims 3 to 6, characterized in that the negative setting angle (28) of the cutting edges (17a) of the cutting teeth (17) is 25 to 35°.

8. Screw according to one of the claims 1 to 7, characterized in that in place of or in the extension of the screw head (11) is provided an extension, particularly a screw bolt with a metric thread.

9. Use of a screw according to one of the claims 1 to 8 in a hole, characterized in that the lead (p) with respect to the diameter ($d_b$) of the predrilled hole (10) for receiving the screw is as follows:

$$1 \geq \frac{p}{d_b} \geq 0.6$$

10. Use according to claim 9, characterized in that the core diameter ($d_k$) behaves in the following way with respect to the diameter of the hole ($d_b$)

$$1 \geq \frac{d_k}{d_b} \geq 1 - \frac{0.5}{d_b}$$

11. Use according to one of the claims 9 or 10, characterized in that the external diameter ($d_a$) with respect to the diameter of the hole ($d_b$) behaves in the following way:

$$d_a = -0.0277\, d_b^2 + 1.491\, d_b - 0.447$$

**Revendications**

1. Vis auto-taraudeuse destinée à être vissée directement dans le béton, la maçonnerie ou analogue, comprenant une tête de vis (11) et une tige de vis (12), dont le filet (14) s'étend au moins partiellement sur la longueur de la tige de la vis, dans laquelle le rapport du diamètre extérieur ($d_a$) au diamètre du noyau ($d_K$) de la vis est d'environ 1,25 à 1,5, le rapport du diamètre extérieur ($d_a$) au pas (p) du filet (14) est d'environ 1,5 à 1,6 et l'angle ($\alpha$) des flancs du filet (14) est inférieur à 50° et supérieur ou égal à 35°.

2. Vis selon la revendication 1, caractérisée en ce que la tige de la vis présente, de part et d'autre du pied du filet, des gorges (8, 9) destinées à recevoir la poussière de pierre arrachée.

3. Vis selon une des revendications 1 et 2, caractérisée en ce que l'arête (15) du filet (14) présente des dents de coupe (17) en forme d'étrave.

4. Vis selon la revendication 3, caractérisée en ce que l'arête (15) du filet (14) est interrompue à intervalles par des évidements (16), en ce que les segments de l'arête qui subsistent entre les évidements (16) forment les dents de coupe (17) en forme d'étrave et en ce que les arêtes tranchantes (17a) des dents de coupe (17), qui s'étendent dans le même plan que l'arête du filet, pointent dans le sens du vissage du filet (14) et sont inclinées d'un angle négatif (28) par rapport à la direction radiale (30).

5. Vis selon la revendication 3 ou 4, caractérisée en ce qu'il est prévu six à trente dents de coupe (17) par spire du filet (14).

6. Vis selon une des revendications 3 à 5, caractérisée en ce que les évidements (16) qui donnent naissance aux dents de coupe (17) présentent une profondeur (t) qui vaut 5/7 à 7/7 de la hauteur (h) du filet.

7. Vis selon une des revendications 3 à 6, caractérisée en ce que l'angle de coupe négatif (28) des arêtes tranchantes (17a) des dents de coupe (17) vaut de 25 à 35°.

8. Vis selon une des revendications 1 à 7, caractérisée en ce qu'en remplacement ou dans le prolongement de la tête (11) de la vis, est prévu un prolongateur, en particulier une vis à pas métrique.

9. Utilisation d'une vis selon une des revendications 1 à 8 dans un perçage, caractérisée en ce que le pas (p) est lié au diamètre ($d_b$) du perçage (10) préalablement percé pour recevoir la vis par la relation suivante :

$$1 \geq \frac{p}{d_b} \geq 0,6$$

10. Utilisation selon la revendication 9, caractérisée en ce que le diamètre de noyau ($d_k$) est lié au diamètre ($d_b$) du perçage par la relation suivante :

$$1 \geq \frac{d_k}{d_b} \geq 1 - \frac{0,5}{d_b}$$

11. Utilisation selon une des revendications 9 et 10, caractérisée en ce que le diamètre extérieur ($d_k$) est lié au diamètre ($d_b$) du perçage par la relation suivante :

$$d_a = -0,0277 \, d_b^2 + 1,491 \, d_b - 0,477$$

Fig.1

Fig.2

EP 0 623 759 B1

FIG. 3

FIG. 4

FIG. 5

FIG. 6

FIG. 7

8